# EUROPEAN PATENT SPECIFICATION

(11) **EP 1 034 607 B1**
(45) Date of publication and mention of the grant of the patent: **11.09.2002**
(21) Application number: 98965719.2
(22) Date of filing: 30.11.1998
(51) Int. Cl.: H02K 3/40, H01B 9/02

(54) **INSULATED CONDUCTOR FOR HIGH-VOLTAGE MACHINE WINDINGS**
ISOLIERTER LEITER FÜR HOCHSPANNUNGSMASCHINEWICKLUNGEN
CONDUCTEUR ISOLE POUR ENROULEMENTS DE MACHINE HAUTE TENSION

(30) Priority: 28.11.1997 GB 9725329
(43) Date of publication of application: 13.09.2000
(73) Proprietor: ABB AB, 721 83 Västeras (SE)
(72) Inventor: CARSTENSEN, Peter, S-141 42 Huddinge (SE); KYLANDER, Gunnar, S-723 43 Västeras (SE)
(74) Representative: Hanson, William Bennett
(86) International application number: EP9807731
(87) International publication number: WO99029022

(56) References cited:
- DE-A- 4 022 476

## Description

### TECHNICAL FIELD

The present invention relates in a first aspect to an insulated conductor for high-voltage windings in rotating electric machines and also possibly transformers.

A second aspect of the present invention relates to a rotating electric machine comprising an insulated conductor of the type described above.

A particularly useful application of the invention is in a generator in a power station for generating electric power.

The invention is applicable in rotating electric machines such as synchronous machines. The invention is also applicable in other electric machines such as dual-fed machines, and applications in asynchronous static current cascades, outer pole machines and synchronous flow machines, provided their windings consist of insulated electric conductors of the invention, and preferably at high voltages. "High voltages" here refers to electric voltages exceeding 10 kV, in particular in excess of 36 kV, and preferably more than 72.5 kV up to very high voltages such as 400 kV to 800 kV or higher.

### BACKGROUND ART:

In order to be able to explain and describe the machine, a brief description of a rotating electric machine will first be given, exemplified on the basis of a synchronous machine. The first part of the description substantially relates to the magnetic circuit of such a machine and how it is constructed according to classical technique. Since the magnetic circuit referred to in most cases is located in the stator, the magnetic circuit below will normally be described as a stator with a laminated core, the winding of which will be referred to as a stator winding, and the slots in the laminated core for the winding will be referred to as stator slots or simply slots.

The stator winding is located in slots in the sheet iron core, the slots normally having a rectangular or trapezoidal cross section. Each winding phase comprises a number of series-connected coil groups and each coil group comprises a number of series-connected coils. The different parts of the coil are designated coil side for the part which is placed in the stator and winding end for that part which is located outside the stator. A coil comprises one or more conductors brought together in height and/or width.

Between each conductor there is a thin insulation, for example epoxy/glass fibre.

The coil is insulated from the slot with a coil insulation, that is, an insulation intended to withstand the rated voltage of the machine to earth. As insulating material, various plastic, varnish and glass fibre materials may be used. Usually, so-called mica tape is used, which is a mixture of mica and hard plastic, especially produced to provide resistance to partial discharges, which can rapidly break down the insulation. The insulation is applied to the coil by winding the mica tape around the coil in several layers. The insulation is impregnated, and then the coil side is painted with a graphite-based paint to improve the contact with the surrounding stator which is connected to earth potential.

The conductor area of the windings is determined by the current intensity in question and by the cooling method used. The conductor and the coil are usually formed with a rectangular shape to maximize the amount of conductor material in the slot. A typical coil is formed of so-called Roebel bars, in which certain of the bars may be made hollow for a coolant. A Roebel bar comprises a plurality of rectangular, parallel-connected copper conductors which are transposed 360 degrees along the slot. Ringland bars with transpositions of 540 degrees and other transpositions also occur. The transposition is made to avoid the occurrence of circulating currents which are generated in a cross section of the conductor material, as viewed from the magnetic field.

For mechanical and electrical reasons, a machine cannot be made in just any size. The machine power is determined substantially by three factors:
- The conductor area of the windings. At normal operating temperature, copper, for example, has a maximum value of 3-3.5 A/mm².
- The maximum flux density (magnetic flux) in the stator and rotor material.
- The maximum electric field strength in the insulating material, the so-called dielectric strength.

Polyphase ac windings are designed either as single-layer or two-layer windings. In the case of single-layer windings, there is only one coil side per slot, and in the case of two-layer windings there are two coil sides per slot. Two-layer windings are usually designed as diamond windings, whereas the single-layer windings which are relevant in this connection may be designed as a diamond winding or as a concentric winding. In the case of a diamond winding, only one coil span (or possibly two coil spans) occurs, whereas flat windings are designed as concentric windings, that is, with a greatly varying coil span. By coil span is meant the circumferential distance between two coil sides belonging to the same coil, either in relation to the relevant pole pitch or in the number of intermediate slot pitches. Usually, different variants of chording are used, for example short-pitching pitch, to give the winding the desired properties.

The type of winding substantially determines how the coils in the slots, that is, the coil sides, are connected together outside the stator, that is, at the winding ends.

Outside the stacked sheets of the stator, the coil is not provided with a painted semiconducting earth-potential layer. The end winding end is normally provided with an E-field control in the form of so-called corona protection varnish intended to convert a radial field into an axial field, which means that the insulation on the end windings ends occurs at a high potential relative to earth. This sometimes gives rise to corona in the winding-end region, which may be destructive. The so-called field-controlling points at the winding ends entail problems for a rotating electric machine.

Normally, all large machines are designed with a two-layer winding and equally large coils. Each coil is placed with one side in one of the layers and the other side in the other layer. This means that all the coils cross each other at the winding ends. If more than two layers are used, these crossings render the winding work difficult and deteriorate the winding ends.

It is generally known that the connection of a synchronous machine/generator to a power network must be made via a Æ/YD-connected so-called step-up transformer, since the voltage of the power network normally lies at a higher level than the voltage of the rotating electric machine. Together with the synchronous machine, this transformer thus constitutes integrated parts of a plant. The transformer constitutes an extra cost and also has the disadvantage that the total efficiency of the system is lowered. If it were possible to manufacture machines for considerably higher voltages, the step-up transformer could thus be omitted.

During the last few decades, there have been increasing requirements for rotating electric machines with higher rated voltages than for what has previously been possible to design. The maximum voltage level which, according to the state of the art, has been possible to achieve for synchronous machines with a goody yield in the coil production is around 25-30 kV.

Certain attempts to a new approach as regards the design of synchronous machines are described, inter alia, in an article entitled "Water-and-oil-cooled Turbogenerator TVM-300" in J. Elektrotechnika, No. 1, 1970, pp. 6-8, in US 4,429,244 "Stator of Generator" and in Soviet Union Patent No. 955369.

The water- and oil-cooled synchronous machine described in J. Elektrotechnika is intended for voltages up to 20 kV. The article describes a new insulation system consisting of oil/paper insulation, which makes it possible to immerse the stator completely in oil. The oil can then be used as a coolant and an insulator at the same time. To prevent oil in the stator from leaking out towards the rotor, a dielectric oil-separating ring is provided at the internal surface of the core. The stator winding is made from conductors with an oval hollow shape provided with oil and paper insulation. The coil sides with their insulation are secured to the slots made with rectangular cross section by means of wedges. As coolant, oil is used both in the hollow conductors and in holes in the stator walls. Such cooling systems, however, entail a large number of connections of both oil and electricity at the coil ends. The thick insulation also entails an increased radius of curvature of the conductors, which in turn results in an increased size of the winding overhang.

The above-mentioned US patent relates to the stator part of a synchronous machine which comprises a magnetic core of laminated sheet with trapezoidal slots for the stator winding. The slots are tapered since the need for insulation of the stator winding is less towards the interior of the rotor where that part of the winding which is located nearest the neutral point is located. In addition, the stator part comprises a dielectric oil-separating cylinder nearest the inner surface of the core. This part may increase the magnetization requirement relative to a machine without this ring. The stator winding is made of oil-immersed cables with the same diameter for each coil layer. The layers are separated from each other by means of spacers in the slots and secured by wedges. What is special for the winding is that it comprises two so-called half-windings connected in series. One of the two half-windings is located, centered, inside an insulating sleeve. The conductors of the stator winding are cooled by surrounding oil. Disadvantages with such a large quantity of oil in the system are the risk of leakage and the considerable amount of cleaning work which may result from a fault condition. Those parts of the insulating sleeve which are located outside the slots have a cylindrical part and a conical termination reinforced with current-carrying layers, the purpose of which is to control the electric field strength in the region where the cable enters the end winding.

From SU 955369 it is clear, in another attempt to raise the rated voltage of the synchronous machine, that the oil-cooled stator winding comprises a conventional high-voltage cable with the same dimension for all the layers. The cable is placed in stator slots formed as circular, radially located openings corresponding to the cross-section area of the cable and the necessary space for fixing and for coolant. The different radially located layers of the winding are surrounded by and fixed in insulating tubes. Insulating spacers fix the tubes in the stator slot. Because of the oil cooling, an internal dielectric ring is also needed here for sealing the oil coolant off against the internal air gap. The disadvantages of oil in the system described above also apply to this design. The design also exhibits a very narrow radial waist between the different stator slots, which implies a large slot leakage flux which significantly influences the magnetization requirement of the machine.

A report from Electric Power Research Institute, EPRI, EL-3391, from 1984 describes a review of machine concepts for achieving a higher voltage of a rotating electric machine with the purpose of being able to connect a machine to a power network without an intermediate transformer. Such a solution is judged by the investigation to provide good efficiency gains and great economic advantages. The main reason it was considered possible in 1984 to start developing generators for direct connection to power networks was that at the time a superconducting rotor had been produced. The large magnetization capacity of the superconducting field makes it possible to use an air gap winding with a sufficient insulation thickness to withstand the electrical stresses. By combining the most promising concept, according to the project, of designing a magnetic circuit with a winding, a so-called monolith cylinder armature, a concept where the winding comprises two cylinders of conductors concentrically enclosed in three cylindrical insulating casings and the whole structure being fixed to an iron core without teeth, it was judged that a rotating electric machine for high voltage could be directly connected to a power network. The solution meant that the main insulation had to be made sufficiently thick to cope with network-to-network and network-to-earth potentials. The insulation system which, after a review of all the technique known at the time, was judged to be necessary to manage an increase to a higher voltage was that which is normally used for power transformers and which consists of dielectric-fluid-impregnated cellulose press board. Obvious disadvantages with the proposed solution are that, in addition to requiring a superconducting rotor, it requires a very thick insulation which increases the size of the machine. The end windings must be insulated and cooled with oil or freons to control the large electric fields in the ends. The whole machine must be hermetically enclosed to prevent the liquid dielectric from absorbing moisture from the atmosphere.

JP-A-8-195129 describes a high voltage cable, especially a long superhigh voltage CV cable, having two outer semiconductive layers, of which the internal layer has a higher resistivity than the external layer. However, because of the outer metallic screen of this cable, it would be totally unsuitable and dangerous for use in a rotating machine or transformer.

DE-A-4022476 also discloses an insulated conductor for high voltage comprising a first and a second semiconductive layer.

More generally, it is known that a high-voltage cable for transmission of electric energy is composed of conductors with solid extruded insulation with an inner and an outer semiconductor part. In the process of transmitting electric energy it was required that the insulation should be free from defects. During transmission of electric energy, the starting-point has long been that the insulation should be free from defects. When using high-voltage cables for transmission of electric energy, the aim was not been to maximize the current through the cable since space is no limitation for a transmission cable.

When manufacturing rotating electric machines according to the state of the art, the winding is manufactured with conductors and insulation systems in several steps, whereby the winding must be preformed prior to mounting on the magnetic circuit. Impregnation for preparing the insulation system is performed after mounting of the winding on the magnetic circuit.

To increase the power of a rotating electrical machine, it is known to increase the current in the AC coils. This has been achieved by optimizing the quantity of conducting material, that is, by close-packing of rectangular conductors in the rectangular rotor slots. The aim has been to handle the increase in temperature resulting from this by increasing the quantity of insulating material and using more temperature-resistant and hence more expensive insulating materials. The high temperature and field load on the insulation has also caused problems with the life of the insulation. In the relatively thick-walled insulating layers which are used for high-voltage equipment, for example impregnated layers of mica tape, partial discharges, PD, constitute a serious problem. When manufacturing these insulating layers, cavities, pores, and the like, will easily arise, in which internal corona discharges arise when the insulation is subjected to high electric field strengths. These corona discharges gradually degrade the material and may lead to electric breakdown through the insulation.

### SUMMARY OF THE INVENTION:

It is an object of the invention to be able to manufacture a rotating electric machine for high voltage without any complicated preforming of the winding and without having to impregnate the insulation system after mounting of the winding.

The present invention is based on the realization that, to be able to increase in the power of a rotating electrical machine in a technically and economically justifiable way, this must be achieved by ensuring that the insulation is not broken down by the phenomena described above. This can be achieved by using, as insulation, layers made in such a way that the risk of cavities and pores is minimal, for example extruded layers of a suitable solid insulating material, such as thermoplastic resins, cross linked thermoplastic resins, rubber such as silicone rubber, etc. In addition, it is important that the insulating layer comprises an inner layer, surrounding the conductor, with semiconducting properties and that the insulation is also provided with at least one additional outer layer, surrounding the insulation, with semiconducting properties. "Semiconducting" refers in this context to a material which has a considerably lower conductivity than an electric conductor but which does not have such a low conductivity that it is an insulator. By using only insulating layers which may be manufactured with a minimum of defects and, in addition, providing the insulation with an inner and an outer semiconducting layer, it can be ensured that the thermal and electric loads are reduced. The insulating part with at least one adjoining semiconducting layer should have essentially the same coefficient of thermal expansion. At temperature gradients, defects caused by different temperature expansion in the insulation and the surrounding layers should not arise. The electric load on the material decreases as a consequence of the fact that the semiconducting layers around the insulation will constitute equipotential surfaces and that the electrical field in the insulating part will be distributed relatively evenly over the thickness of the insulation. The outer semiconducting layer may be connected to a chosen potential, for example earth potential. This means that, for such a cable, the outer casing of the winding over its entire length may be kept at, for example, earth potential. The outer layer may also be cut off at suitable locations along the length of the conductor and each cut-off partial length may be directly connected to a chosen potential.

The present invention provides an insulated conductor for high-voltage windings in rotating electric machines as defined in claim 1 and also a rotating electric machine comprising such an insulated conductor. The high-voltage cable according to the present invention comprises one or more strands surrounded by a first semi-conducting layer. This first semi-conducting layer is in turn surrounded by a first insulating layer, which is surrounded by second and third semi-conducting layers. The second semi-conducting layer is of higher resistivity than the third semi-conducting layer, which is earthed at least two different points along the high-voltage cable. The part of the cable that lies in the stator slots should be electrically insulated from the magnetic steel of the stator. Between each pair of earthed points along the high-voltage cable, the continuity of the electric contact is broken in the third semi-conducting layer. At each such break in the third semi-conductive layer a device may be arranged to reduce amplification of the electric field strength at said breaks.

Thanks to the high-voltage cable according to the invention no heat losses are caused by induced voltages in the outer semi-conducting layer. A high-voltage cable is obtained in which the risk of electric breakthrough has been minimized. In forming the break in third semi-conductive layer, any risk of cutting into the insulating layer is avoided, the second semi-conductive layer remaining substantially intact.

Further knowledge gained in connection with the present invention is that increased current load leads to problems with electric (E) field concentrations at the corners at a cross section of a coil and that this entails large local loads on the insulation there. Likewise, the magnetic (B) field in the teeth of the stator will be concentrated at the corners. This means that magnetic saturation arises locally and that the magnetic core is not utilized in full and that the wave form of the generated voltage/current will be distorted. In addition, eddy-current losses caused by induced eddy currents in the conductors, which arise because of the geometry of the conductors in relation to the B field, will entail additional disadvantages in increasing current densities. A further improvement of the invention is achieved by making the coils and the slots in which the coils are placed essentially circular instead of rectangular. By making the cross section of the coils circular, these will be surrounded by a constant B field without concentrations where magnetic saturation may arise. Also the E field in the coil will be distributed evenly over the cross section and local loads on the insulation are considerably reduced. In addition, it is easier to place circular coils in slots in such a way that the number of coil sides per coil group may increase and an increase of the voltage may take place without the current in the conductors having to be increased. The reason for this is that the cooling of the conductors is facilitated by, on the one hand, a lower current density and hence lower temperature gradients across the insulation and, on the other hand, by the circular shape of the slots which entails a more uniform temperature distribution over a cross section. Additional improvements may also be achieved by composing the conductor from smaller parts, so-called strands. The strands may be insulated from each other and only a small number of strands may be left uninsulated and in contact with the inner semiconducting layer, to ensure that this is at the same potential as the conductor.

An advantage of using a rotating electric machine according to the invention is that the machine can be operated at overload for a considerably longer period of time than what is usual for such machines without being damaged. This is a consequence of the composition of the machine and the limited thermal load of the insulation. It is, for example, possible to load the machine with up to 100% overload for a period exceeding 15 minutes and up to two hours.

One embodiment according to the invention is that the magnetic circuit of the rotating electric machine comprises a winding of a threaded cable with one or more extruded insulated conductors with solid insulation with a semiconducting layer both at the conductor and the casing. The outer semiconducting layer may be connected to earth potential. To be able to cope with the problems which arise in case of direct connection of rotating electric machines to all types of high-voltage power networks, a machine according to the invention has a number of features which distinguish it from the state of the art.

As described above, a winding for a rotating electric machine may be manufactured from a cable with one or more extruded insulated conductors with solid insulation with a semiconducting layer both at the conductor and at the casing. Some typical examples for the solid insulation are cross-linked polyethylene (XLPE) and ethylene propylene rubber. A further development of a conductor composed of strands is possible in that it is possible to insulate the strands with respect to each other in order thus to reduce the amount of eddy current losses in the conductor. One or a few strands may be left uninsulated to ensure that the semiconducting layer which surrounds the conductor is at the same potential as the conductor.

Insulation of a conductor for a rotating electric machine may be applied in some other way than by means of extrusion, for example by spraying or the like. It is important, however, that the insulation should have no defects through the whole cross section and should possess similar thermal properties. The semiconducting layers may be supplied with the insulation in connection with the insulation being applied to the conductors.

Preferably, cables with a circular cross section are used. Among other things, to obtain a better packing density, cables with a different cross section may be used. To build up a voltage in the rotating electric machine, the cable is arranged in several consecutive turns in slots in the magnetic core. The winding can be designed as a multi-layer concentric cable winding to reduce the number of end-winding-end crossings. The cable may be made with tapered insulation to utilize the magnetic core in a better way, in which case the shape of the slots may be adapted to the tapered insulation of the winding.

A significant advantage of a rotating electrical machine according to the invention is that the E field is near zero in the winding-end region outside the outer semiconductor and that with the outer casing at earth potential, the electric field need not be controlled. This means that no field concentrations can be obtained, neither within sheets, in winding-end regions or in the transition between.

A winding made according to the invention is placed in the slots by threading a cable into the openings in the slots in the magnetic core. Since the cable is flexible, it can be bent and this permits a cable length to be located in several turns in a coil. The winding ends will then consist of bending zones in the cables. The cable may also be joined in such a way that its properties remain constant over the cable length. This method entails considerable simplifications compared with the state of the art. The so-called Roebel bars are not flexible but must be preformed into the desired shape. Impregnation of the coils is also an exceedingly complicated and expensive technique when manufacturing rotating electric machines today.

The invention will now be explained in more detail in the following description of a preferred embodiment, with reference to the accompanying drawings.

### BRIEF DESCRIPTION OF THE DRAWINGS:

Figure 1 shows a cross section through a high-voltage cable; and
Figure 2 shows a side view of a high-voltage cable with a break in the third semi-conducting layer.

### DETAILED DESCRIPTION OF EMBODIMENTS OF THE PRESENT INVENTION:

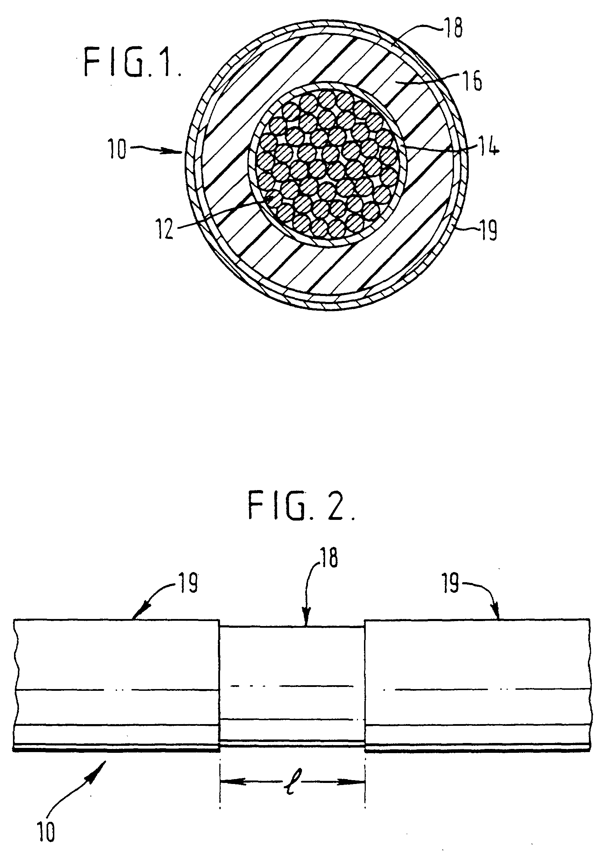

Figure 1 shows a cross-sectional view of a high-voltage cable 10 similar to that used traditionally for transmitting electric power. The high-voltage cable 10 shown may be similar to that shown in JP-A-8-195129 (145 kV) but without sheath or screen. The high-voltage cable 10 comprises an electric conductor which may consist of one or more strands 12 of copper (Cu), for instance, having circular cross section. These strands 12 are arranged in the middle of the high-voltage cable 10. Around the strands 12 is a first semi-conducting layer 14, and around the first semi-conducting layer 14 is a first insulating layer 16, e.g. XLPE insulation. Around the first insulating layer 16 is a second semi-conducting layer 18, and externally of the second semi-conducting layer 18 is a third semi-conducting layer 19 of lower resistivity than the second semi-conducting layer. The semi-conducting layers 14, 18, 19 are all formed from a base polymer such as ethylene vinyl acetate copolymer/nitrile rubber, butyl grafted polythene, ethylene ethyl acrylate copolymer, ethylene propene rubber or polyethylenes of high or low density, filled with carbon black.

Figure 2 shows a side view, of a portion of the high-voltage cable with a break in the third semi-conducting layer 19. As can be seen in Figure 2, the third semi-conducting layer 19 has been removed in an elongated ring around the periphery of the high-voltage cable 10 so that a break 20 is formed. The second semi-conducting layer 18 is thus exposed in the break 20. The axial length 1 of the break 20 is from 5 to 30 cm. This break in the continuity of the electric contact in the third semi-conducting layer 19 between two earthed points, ensures that limited current will flow and therefore essentially no heat losses will occur caused by induced voltages.

Our International Patent Application No. WO97/4591 describes a cable in which only the third semi-conducting layer 19 is absent and breaks are made in the second semi-conducting layer 18. In this prior invention, all interruptions in the second semi-conducting layer 18 give rise to an increase in the electric field strength at the edges of the break. The electric field strength increases sharply at the edges of the groove, which unfortunately increases the risk of electric breakdown. The embodiment of the present invention shown alleviates this disadvantage because some current can still flow through the second semi-conducting layer 18 in the region below the break 20.

The high-voltage cable 10 according to Figure 1, said cable 10 comprising an electric conductor consisting of one or more strands 12, a first semi-conducting layer 14, a first insulating 16, a second semi-conducting 18, and a third semi-conducting layer 19 can be produced by extrusion through a suitable die. The third semi-conducting layer 19 will be earthed at at least two different points along the high-voltage cable. The next step is to produce a break 20 in the continuity of the electric contact in the third semi-conducting layer 19 between each earthing point. If there are N earthed points along the high-voltage cable, therefore, there will be N-1 breaks 20 in the semi-conducting layer 19.

The electrical insulation of an electrical conductor according to the invention is intended to be able to handle very high voltages, e.g. up to 800 kV or higher, and the consequent electric and thermal loads which may arise at these voltages. By way of example, electrical conductors according to the invention may comprise windings of power transformers having rated powers from a few hundred kVA up to more than 1000 MVA and with rated voltages from 3 - 4 kV up to very high transmission voltages of from 400 - 800 kV or more. At high operating voltages, partial discharges, or PD, constitute a series problem for known insulation systems. If cavities or pores are present in the insulation, internal corona discharge may arise whereby the insulating material is grandually degraded eventually leading to breakdown of the insulation. The electric load on the electrical insulation in use of an electrical conductor according to the present invention is reduced by ensuring that the inner layer of semi-conductive material of the insulation system is at substantially the same electric potential as conductors of the central electrically conductive means which it surrounds and the semi-conductive outer layer is at a controlled, e.g. earth, potential. Thus, the electric field in the electrically insulating layer between these inner and outer layers is distributed substantially uniformly over the thickness of the intermediate layer. By having materials with similar thermal properties and with a few defects in these layers of the insulation system, the possibility of PD is reduced at given operating voltages. The electrical conductor can thus be designed to withstand very high operating voltages, typically up to 800 kV or higher.

The invention is not limited to the embodiments shown. Several variations are possible within the scope of the appended claims.

## Claims

1. An insulated conductor (10) for high-voltage windings in electric machines, **characterized in that** the insulated conductor comprises one or more strands (12); an inner, first semi-conductive layer (14) surrounding the strands (12); a first insulating layer (16) surrounding the inner, first semi-conductive layer (14); a second semi-conductive layer (18) surrounding the first insulating layer (16); and an outer, third semi-conductive layer (19) surrounding the second semi-conductive layer (18), which third semi-conductive layer (19) is earthed at at least two different points along the insulated conductor, the continuity of the electric contact in the third semi-conductive layer (19) being broken (20) between two consecutive earthed points.

2. An insulated conductor (10) as claimed in claim 1, **characterized in that** the continuity of the electric contact in the third semi-conductive layer (19) is broken by the third semi-conductive layer (19) being removed around the periphery of the insulated conductor (30) down to the second semi-conductive layer (18) so that breaks (20) are formed flanked by the third semi-conductive layer (19).

3. An insulated conductor as claimed in claim 2, wherein the axial length of each break (20) is from 5 to 30 cm.

4. A conductor according to any one of the preceding claims, **characterised in that** the insulating and semi-conductive layers are designed for high voltage, suitably in excess of 10 kV, in particular in excess of 36 kV, and preferably more than 72.5 kV up to very high transmission voltages, such as 400 kV to 800 kV or higher.

5. A conductor according to any one of the preceding claims, **characterised in that** the insulating and semi-conductive layers are designed for a power range in excess of 0.5 MVA preferably in excess of 30 MVA and up to 1000 MVA.

6. An electric machine comprising an insulated conductor (10) as claimed in any of claims 1 to 5.

7. A rotating electric machine as claimed in claim 6.

8. A large generator as claimed in claim 6.

9. An electric machine as claimed in claim 7 or 8, **characterized in that** the third semi-conductive layer (19) is electrically insulated from the stator within the stator slot and that the third semi-conductive layer (19) has at least one break and one earthing point in the overhang region for each stator slot that the cable passes through.

## Patentansprüche

1. Isolierter Leiter (10) für Hochspannungswicklungen in elektrischen Maschinen, **dadurch gekennzeichnet, daß** der isolierte Leiter ein oder mehrere Einzeldrähte (12) umfaßt; eine innere erste halbleitende Schicht (14), die die Einzeldrähte (12) umgibt; eine erste isolierende Schicht (16), die die innere erste halbleitende Schicht (14) umgibt; eine zweite halbleitende Schicht (18), die die erste isolierende Schicht (16) umgibt; und eine äußere dritte halbleitende Schicht (19), die die zweite halbleitende Schicht (18) umgibt, wobei die dritte halbleitende Schicht (19) an mindestens zwei verschiedenen Punkten entlang dem isolierten Leiter geerdet ist, wobei die Durchgängigkeit des elektrischen Kontakts in der dritten halbleitenden Schicht (19) zwischen zwei aufeinanderfolgenden geerdeten Punkten unterbrochen (20) ist.

2. Isolierter Leiter (10) nach Anspruch 1, **dadurch gekennzeichnet, daß** die Durchgängigkeit des elektrischen Kontakts in der dritten halbleitenden Schicht (19) dadurch unterbrochen wird, daß die dritte halbleitende Schicht (19) um die Peripherie des isolierten Leiters (30) bis herunter zu der zweiten halbleitenden Schicht (18) entfernt ist, so daß Unterbrechungen (20) entstehen, die von der dritten halbleitenden Schicht (19) flankiert werden.

3. Isolierter Leiter nach Anspruch 2, wobei die axiale Länge jeder Unterbrechung (20) zwischen 5 und 30 cm beträgt.

4. Leiter nach einem der vorhergehenden Ansprüche, **dadurch gekennzeichnet, daß** die isolierenden und halbleitenden Schichten für Hochspannung ausgelegt sind, geeigneterweise für mehr als 10 kV, insbesondere mehr als 36 kV und vorzugsweise mehr als 72,5 kV bis zu sehr hohen Übertragungsspannungen, wie zum Beispiel 400 kV bis 800 kV oder höher.

5. Leiter nach einem der vorhergehenden Ansprüche, **dadurch gekennzeichnet, daß** die isolierenden und halbleitenden Schichten für einen Leistungsbereich von mehr als 0,5 MVA, vorzugsweise mehr als 30 MVA und bis zu 1000 MVA ausgelegt sind.

6. Elektrische Maschine mit einem isolierten Leiter (10) nach einem der Ansprüche 1 bis 5.

7. Rotierende elektrische Maschine nach Anspruch 6.

8. Großer Generator nach Anspruch 6.

9. Elektrische Maschine nach Anspruch 7 oder 8, **dadurch gekennzeichnet, daß** die dritte halbleitende Schicht (19) von dem Stator in dem Statorschlitz elektrisch isoliert ist und die dritte halbleitende Schicht (19) in dem Überhangbereich für jeden Statorschlitz, durch den das Kabel verläuft, mindestens einen Unterbrechungs- und einen Erdungspunkt aufweist.

## Revendications

1. Conducteur isolé (10) pour enroulements haute tension dans des machines électriques, **caractérisé en ce que** le conducteur isolé comprend un ou plusieurs brins (12) ; une première couche interne semiconductrice (14) entourant les brins (12) ; une première couche isolante (16) entourant la première couche interne semiconductrice (14) ; une deuxième couche semiconductrice (18) entourant la première couche isolante (16) ; et une troisième couche externe semiconductrice (19) entourant la deuxième couche semiconductrice (18), laquelle troisième couche semiconductrice (19) est mise à la terre en au moins deux points différents le long du conducteur isolé, la continuité du contact électrique dans la troisième couche semiconductrice (19) étant rompue (20) entre deux points consécutifs mis à la terre.

2. Conducteur isolé (10) selon la revendication 1, **caractérisé en ce que** la continuité du contact électrique dans la troisième couche semiconductrice (19) est rompue par le fait que la troisième couche semiconductrice (19) est enlevée autour de la périphérie du conducteur isolé (30) jusqu'à la deuxième couche semiconductrice (18) de sorte que des interruptions (20) soient formées, bordées par la troisième couche semiconductrice (19).

3. Conducteur isolé selon la revendication 2, dans lequel la longueur axiale de chaque interruption (20) est de 5 à 30 cm.

4. Conducteur selon l'une quelconque des revendications précédentes, **caractérisé en ce que** les couches isolantes et semiconctrices sont conçues pour une haute tension, de manière appropriée dépassant 10 kV, en particulier dépassant 36 kV, et de préférence supérieure à 72,5 kV, jusqu'à des tensions de transmission très élevées, telles que 400 kV à 800 kV ou plus.

5. Conducteur selon l'une quelconque des revendications précédentes, **caractérisé en ce que** les couches isolantes et semiconductrices sont conçues pour une plage de puissance dépassant 0,5 MVA, de préférence dépassant 30 MVA et jusqu'à 1000 MVA.

6. Machine électrique comprenant un conducteur isolé (10) selon l'une quelconque des revendications 1 à 5.

7. Machine électrique rotative selon la revendication 6.

8. Gros générateur selon la revendication 6.

9. Machine électrique selon la revendication 7 ou 8, **caractérisée en ce que** la troisième couche semiconductrice (19) est isolée électriquement du stator dans l'encoche du stator et **en ce que** la troisième couche semiconductrice (19) a au moins une interruption et un point de mise à la terre dans la région de surplomb pour chaque encoche de stator à travers laquelle passe le câble.
